# EUROPÄISCHE PATENTSCHRIFT

(11) **EP 2 853 692 B1**
(45) Veröffentlichungstag und Bekanntmachung des Hinweises auf die Patenterteilung: **13.06.2018**
(21) Anmeldenummer: 13185903.5
(22) Anmeldetag: 25.09.2013
(51) Int. Cl.: F01D 25/24, F16J 15/08, F01D 11/00

(54) **Dichtelement einer axialen Strömungsmaschine**
Sealing element for an axial flow engine
Elément d'étanchéité d'une turbomachine axiale

(43) Veröffentlichungstag der Anmeldung: 01.04.2015
(73) Patentinhaber: MTU Aero Engines AG, 80995 München (DE)
(72) Erfinder: Feldmann, Manfred, 82223 Eichenau (DE); Sangl, Janine, Dachau 85221 (DE)

(56) Entgegenhaltungen:
- WO-A1-2011/154814
- GB-A- 2 080 439
- US-A- 4 645 217
- US-A- 5 474 306
- US-A1- 2004 251 639

## Beschreibung

Die vorliegende Erfindung betrifft ein Dichtelement einer axialen Strömungsmaschine zum Abdichten von Bereichen in oder an wenigstens zwei statischen Bauteilen gemäß Anspruch 1.

Verschiedene Dichtelemente sind aus den Dokumenten US 2004/251639 A1, GB 2 080 439 A, US 5 474 306 A, WO 2011/154814 A1 und US 4 645 217 A bekannt.

In Strömungsmaschinen werden oft zahlreiche Bereiche abgedichtet. Beispielsweise werden Lager gegen Strömungsmedien abgedichtet, oder äußere Gehäusebereiche in der Strömungsmaschine gegen heiße oder aggressive Strömungsmedien. Dazu können die äußeren Gehäusebereiche Kühlungskanäle, Hohlräume und Leitschaufelaufhängungen mit Halteblechen aufweisen. Die Dichtungen können Labyrinthdichtungen oder berührende Dichtungen sein. Bei berührenden Dichtungen können Fertigungs- oder Montagetoleranzen oder thermische Ausdehnungen einzelner Bauteile zu Dichtungsversagen im Betriebszustand führen.

Eine Aufgabe der vorliegenden Erfindung ist es, ein Dichtelement einer axialen Strömungsmaschine vorzuschlagen, mit dem beispielsweise Fertigungs- oder Montagetoleranzen statischer Bauteile der Strömungsmaschine oder thermische Ausdehnungen im Betriebszustand der Strömungsmaschine ausgeglichen werden können, ohne dass das Dichtelement seine Dichtfunktion verliert oder zumindest die Dichtfunktion nicht wesentlich reduziert wird.

Die erfindungsgemäße Aufgabe wird durch ein Dichtelement mit den Merkmalen des Anspruchs 1 gelöst.

Erfindungsgemäß wird somit ein Dichtelement einer axialen Strömungsmaschine, insbesondere einer Gasturbine, zum Abdichten von Bereichen in oder an wenigstens zwei statischen Bauteilen der Strömungsmaschine vorgeschlagen. Die statischen Bauteile sind axial relativ zueinander verschiebbar, beispielsweise um gewisse Fertigungs- oder Montagetoleranzen auszugleichen oder thermische Ausdehnungen im Betriebszustand kompensieren zu können. Das erfindungsgemäße Dichtelement weist einen ersten radialen Bereich mit einer ersten Steifigkeit und einen zweiten radialen Bereich mit einer zweiten Steifigkeit auf, wobei die erste und die zweite Steifigkeit voneinander verschieden sind. Das Dichtelement ist in Umfangsrichtung der Strömungsmaschine segmentiert ausgestaltet.

Bei allen vorstehenden und folgenden Ausführungen ist der Gebrauch des Ausdrucks "kann sein" bzw. "kann haben" usw. synonym zu "ist vorzugsweise" bzw. "hat vorzugsweise" usw. zu verstehen und soll erfindungsgemäße Ausführungsformen erläutern.

Wann immer hierin Zahlenworte genannt werden, so versteht der Fachmann diese als Angabe einer zahlenmäßig unteren Grenze. Sofern dies zu keinem für den Fachmann erkennbaren Widerspruch führt, liest der Fachmann daher beispielsweise bei der Angabe "ein" oder "einem" stets "wenigstens ein" oder "wenigstens einem" mit. Dieses Verständnis ist ebenso von der vorliegenden Erfindung mit umfasst wie die Auslegung, dass ein Zahlenwort wie beispielsweise "ein" alternativ als "genau ein" gemeint sein kann, wo immer dies für den Fachmann erkennbar technisch möglich ist. Beides ist von der vorliegenden Erfindung umfasst und gilt für alle hierin verwendeten Zahlenworte.

Vorteilhafte Weiterentwicklungen der vorliegenden Erfindung sind jeweils Gegenstand von Unteransprüchen und Ausführungsformen.

Erfindungsgemäße Ausführungsformen können eines oder mehrere der im Folgenden genannten Merkmale aufweisen.

Im Folgenden werden als Strömungsmaschinen rein beispielhaft insbesondere Gasturbinen beschrieben, ohne jedoch Strömungsmaschinen auf Gasturbinen beschränken zu wollen.

In gewissen erfindungsgemäßen Ausführungsformen sind statische Bauteile der Gasturbine Bauteile, die nicht zu den rotierenden Bauteilen der Gasturbine zu zählen sind. Die rotierenden Bauteile sind im Wesentlichen eine oder mehrere Wellen. I auträder und mit der oder den Welle(n) und/oder den Laufrädern verbundene Bauteile. Statische Bauteile können sich bewegen oder aktiv bewegt werden, wie beispielsweise Gehäusebereiche, Leitschaufeln, Gehäuseklappen, Kühlungselemente oder Ventile. Die statischen Bauteile können aktiv oder passiv bewegt werden. Passiv bewegte, statische Bauteile können sich aufgrund von thermischen Verformungen oder aufgrund von Toleranzen (z. B. Spielpassungen) bewegen, insbesondere in Führungen oder Nuten.

In manchen erfindungsgemäßen Ausführungsformen sind die Dichtelemente in den Gehäusebereichen von Gasturbinen dafür vorgesehen, Leitschaufeln, Leitschaufelaufhängungen, Kühlkanäle oder Gehäusewandungen gegen heiße Strömungsmedien abzudichten. Dichtelemente können den Strömungskanal gegen das heiße Strömungsmedium abdichten, oder gegen andere Gehäusebereiche, in die das heiße Strömungsmedium einströmt oder hindurchtritt. Dies können insbesondere Gehäusebereiche sein, die einen gehäuseseitigen Einlaufbelag (zum Anstreifen von Laufschaufelspitzen oder Laufschaufeldeckbändern), einen Dichtungsträger, Sicherungselemente oder ähnliches aufweisen.

In bestimmten erfindungsgemäßen Ausführungsformen werden die Dichtelemente als Drosseln eingesetzt, um beispielsweise ein Strömungsvolumen (Durchfluss) zu verringern. Mittels eines Dichtelements kann insbesondere der Durchfluss in einem Bypass, neben einer Hauptdurchströmung durch Leitschaufeln und Laufschaufeln, beeinflusst werden. Ein Dichtelement kann druckmindert wirken.

Die Dichtelemente können in gewissen erfindungsgemäßen Ausführungsformen in den sogenannten Outer-Air-Seal (OAS) Bereichen des Gehäuses angeordnet sein.

In einigen erfindungsgemäßen Ausführungsformen ist das Dichtelement an oder in Modulschnittstellen des Gehäuses und/oder an Übergangskanälen in der Gasturbine angeordnet.

In bestimmten erfindungsgemäßen Ausführungsformen ist der erste Bereich des Dichtelements ein radial innen, zur Drehachse der Gasturbine hin gerichtet, liegender oder radial innen angeordneter Bereich, und der zweite Bereich des Dichtelements ein radial außen, zum Außenbereich des Gehäuses der Gasturbine hin gerichtet, liegender oder radial außen angeordneter Bereich. Beispielsweise umfasst der erste Bereich ca. ein Drittel oder ca. die Hälfte der radialen Länge des Dichtelements, und der zweite Bereich entsprechend ca. zwei Drittel oder ca. die Hälfte der radialen Länge des Dichtelements. Ebenso kann der radial erste Bereich des Dichtelements ein radial außen liegender oder radial außen angeordneter Bereich sein, und der zweite Bereich kann radial innen liegend angeordnet sein.

Der Begriff "Steifigkeit", wie er hierin verwendet wird, bezeichnet einen Widerstand des Dichtelements oder von Bereichen oder Abschnitten des Dichtelements gegen eine elastische Verformung. Eine elastische Verformung kann durch eine Kraft, ein Drehmoment oder durch eine Druckdifferenz hervorgerufen oder verursacht werden. In einem Einbauzustand des Dichtelements zwischen zwei statischen Bauteilen der Strömungsmaschine kann beispielsweise das Dichtelement infolge einer thermischen Ausdehnung der Bauteile im Betriebszustand (axiale Verschiebung der Bauteile relativ zueinander oder gegeneinander) elastisch verformt werden. Aufgrund der Steifigkeit des Dichtelements (oder von Bereichen oder Abschnitten des Dichtelements) tritt ein Widerstand gegen diese Verformung auf. Aufgrund erfindungsgemäß unterschiedlicher Steifigkeiten des ersten und des zweiten radialen Bereichs des Dichtelements ist somit der Widerstand der beiden Bereiche unterschiedlich. Dies kann zu unterschiedlichen Verformungen des ersten und zweiten Bereichs aufgrund unterschiedlicher Steifigkeiten führen.

In manchen erfindungsgemäßen Ausführungsformen ist die Steifigkeit des Dichtelements (oder von Bereichen oder Abschnitten des Dichtelements) von dem Werkstoff abhängig.

In gewissen erfindungsgemäßen Ausführungsformen ist
die Steifigkeit des Dichtelements (oder von Bereichen oder Abschnitten des Dichtelements) von der Geometrie des Dichtelements abhängig.

Die Steifigkeit des Dichtelements kann eine Biegesteifigkeit, eine Dehnsteifigkeit, eine Torsionssteifigkeit oder eine Kombination der verschiedenen Steifigkeiten sein. Im Linbauzustand des Dichtelements in der axialen Strömungsmaschine kann insbesondere die Biegesteifigkeit und/oder die Torsionssteifigkeit (Torsion in Umfangsrichtung des segmentierten Dichtelements) für die Dichtfunktion relevant sein, wenn zumindest ein radialer Bereich des Dichtelements in oder an einem statischen Bauteil der Strömungsmaschine fixiert ist.

Das erfindungsgemäß segmentiert ausgestaltete Dichtelement kann in einigen erfindungsgemäßen Ausführungsformen als Segment eines segmentierten oder mehrteiligen Dichtungsrings bezeichnet werden. Ein Segment kann als Ringsegment bezeichnet werden. Mehrere Ringsegmente können ringförmig angeordnet werden und einen vollständigen Ring über 360 Grad in Umfangsrichtung bilden. Die Ringsegmente können an ihren Enden in Umfangsrichtung überlappend oder auf Stoß (direkt stirnseitig aneinanderstoßend) angeordnet oder aneinander gereiht werden.

Ein Dichtelement kann in bestimmten erfindungsgemäßen Ausführungsformen mittels der Maßangaben Innenradius R_{iD} (Radius von der Drehachse der Gasturbine bis zum radial inneren Ende des Dichtelements), Außenradius R_{aD} (Radius von der Drehachse der Gasturbine bis zum radial äußeren Ende des Dichtelements), Bogenlänge L_{D} (Länge des Segmentumfangs), Breite B_{D} (Ausdehnung oder Länge des Dichtelements in Achsrichtung) und Mittelpunktswinkel α (Winkel bezogen auf die Drehachse der Gasturbine über die Bogenlänge) beschrieben werden.

In manchen erfindungsgemäßen Ausführungsformen beträgt der Mindest-Mittelpunktswinkel α_{Min} 15 Grad und der Maximal-Mittelpunktswinkel α_{Max} 180 Grad. Die Steifigkeit, insbesondere die Biegesteifigkeit, des Dichtelements kann im Einbauzustand in der Gasturbine bei einem Winkel α von 15 Grad wesentlich geringer sein als bei einem Winkel α von 180 Grad.

Die erste Steifigkeit des ersten radialen Bereichs ist größer als die zweite Steifigkeit des zweiten radialen Bereichs. Weiterhin ist der erste radiale Bereich mit der größeren Steifigkeit (gegenüber dem zweiten radialen Bereich) in einem statischen Bauteil der Gasturbine fixiert.

In manchen erfindungsgemäßen Ausführungsformen ist der erste radiale Bereich des Dichtelements in einer Nut in einem statischen Bauteil der Strömungsmaschine fixiert. Eine Nut kann beispielsweise eine ringförmige oder segmentierte Gehäusenut sein. Ebenso kann eine Nut mittels ringförmiger oder segmentförmiger Sicherungselemente, beispielsweise zum Fixieren und/oder Sichern von Kühlluftkanälen, in einem statischen Gehäusebereich oder Leitschaufelbereich ausgestaltet oder angeordnet sein. Die Fixierung des ersten Bereichs des Dichtelements in der Nut kann eine Verformung, insbesondere eine elastische Verformung, des Dichtelements zumindest weitgehend verhindern oder blockieren, sofern die Nut selbst nicht elastisch verformbar ist.

In gewissen erfindungsgemäßen Ausführungsformen ist der erste radiale Bereich des Dichtelements an einem Steg in einem statischen Bauteil der Strömungsmaschine fixiert. Ein Steg kann eine Kante, ein umlaufender oder segmentierter Steg eines Blechs oder ein Steg eines Gehäusebereichs sein. Insbesondere ist der Steg eine Kante eines Endbereichs eines Sicherungsblechs, welches am Gehäuse fixiert ist.

Der erste Bereich des Dichtelements ist spiralförmig oder hakenförmig ausgebildet. Dieser spiralförmig oder hakenförmig ausgebildete Bereich weist eine versteifende Wirkung auf, die vorteilhaft für eine Fixierung, beispielsweise in einer Nut, genutzt wird. Anders ausgedrückt ist der spiralförmig oder hakenförmig ausgebildete Bereich des Dichtelements eine wesentlich versteifend wirkende Fixierungskomponente des Dichtelements.

In gewissen erfindungsgemäßen Ausführungsformen ist die zweite Steifigkeit des zweiten radialen Bereichs des Dichtelements kleiner als die erste Steifigkeit des ersten radialen Bereichs. In diesem Ausführungsbeispiel weist der zweite radiale Bereich eine Dichtfläche auf. Die Dichtfläche kann die Form eines Ringsegments aufweisen und senkrecht zur Achsrichtung der Gasturbine ausgerichtet sein. Weiterhin kann der zweite radiale Bereich neben der Dichtfläche einen diagonalen (diagonal in Achsrichtung und in Radialrichtung) Übergangsbereich zwischen dem ersten radialen Bereich und der Dichtfläche aufweisen. Dieser Übergangsbereich ist insbesondere für die Dichtfunktion der Dichtfläche von Bedeutung, indem im Einbauzustand das Dichtelement einerseits mit dem ersten Bereich beispielsweise in einer Nut fixiert wird und andererseits das Dichtelement mit der Dichtfläche an ein statisches Bauteil. insbesondere in Axialrichtung, angedrückt wird. Dies kann insbesondere mittels Vorspannen erfolgen, indem das Dichtelement, welches bereits mit dem ersten Bereich fixiert ist, in Axialrichtung zusammengedrückt und damit vorgespannt wird. Die Vorspannkraft ist insbesondere von der Steifigkeit des zweiten radialen Bereichs des Dichtelements abhängig.

In bestimmten erfindungsgemäßen Ausführungsformen wird die Dichtwirkung des Dichtelements von einer anliegenden Druckdifferenz zumindest verstärkt, indem ein höherer Druck in dem Gehäusebereich herrscht, der auf das Dichtelement wirkt, gegenüber dem Druck in dem weiteren abzudichtenden Gehäusebereich.

In manchen erfindungsgemäßen Ausführungsformen ist der erste radiale Bereich des Dichtungselements an einem Dichtungsträger eines Einlaufbelags für eine Laufschaufel oder für ein Laufschaufeldeckband angeordnet. Der Dichtungsträger kann eine Begrenzungsfläche einer Nut ausbilden, in der der erste Bereich des Dichtelements fixiert ist. Weitere Begrenzungsflächen der Nut können beispielsweise Sicherungselemente in einem Gehäusebereich sein.

In gewissen erfindungsgemäßen Ausführungsformen liegt die Dichtfläche an einer Leitschaufelaufhängung am Gehäuse der Gasturbine an oder ist an der Leitschaufelaufhängung angeordnet.

In einigen erfindungsgemäßen Ausführungsformen sind die abzudichtenden Bereiche in einem Hochdruckturbinenbereich und/oder in einem Niederdruckturbinenbereich angeordnet.

In gewissen erfindungsgemäßen Ausführungsformen sind die abzudichtenden Bereiche im Gehäuse der Strömungsmaschine zwischen dem Hochdruckturbinenbereich und dem Niederdruckturbinenbereich angeordnet.

In bestimmten erfindungsgemäßen Ausführungsformen sind
die abzudichtenden Bereiche zwischen einerseits einer Brennkammer und andererseits einem Hochdruckturbinenbereich oder Hochdruckverdichterbereich angeordnet.

In manchen erfindungsgemäßen Ausführungsformen ist das Dichtelement ein Spiralblech.

Manche oder alle erfindungsgemäßen Ausführungsformen können einen, mehrere oder alle der oben und/oder im Folgenden genannten Vorteile aufweisen.

Mit dem erfindungsgemäßen Dichtelement kann vorteilhaft gegenüber einem Dichtelement mit einem separaten Federelement eine Bauteilreduzierung im Gehäusebereich einer Gasturbine erzielt werden.

Weiterhin können vorteilhaft Kräfte durch die segmentierte Ausgestaltung des Dichtelements, mit dem die Vorspannkräfte im Einbauzustand nicht nur in Achsrichtung, sondern zusätzlich auch in Umfangsrichtung des Dichtelements verteilt werden können, günstiger über das gesamte Dichtelement verteilt werden. Durch diese geringere Materialbelastung des oder der elastischen Bereiche des Dichtelements kann die Kriechverformung (zeitabhängige und/oder temperaturabhängige plastische Verformung unter einer Last) der elastischen Bereiche verringert werden. Kriechverformungen können aufgrund von Axialverschiebungen der statischen Bauteile und/oder aufgrund von Druckbelastungen über dem Dichtelement (z. B. durch erhöhten Druck des Durchströmungsmediums gegenüber einem Druck im Leitschaufelbereich, gegen den abgedichtet wird, oder gegen weitere Gehäuseaußenbereiche) auftreten.

Weiterhin kann die Steifigkeit des Dichtelements, insgesamt oder einzelner Bereiche, insbesondere des Bereiches, der elastisch deformiert und/oder vorgespannt wird, durch unterschiedliche Blechdicken, beispielsweise eines Spiralbleches, erzielt werden.

Die Steifigkeit des Dichtelements, insgesamt oder einzelner Bereiche, kann weiterhin vorteilhaft durch unterschiedliche Materialien verändert und gegebenenfalls an eine Einbausituation angepasst werden.

Weiterhin kann die Steifigkeit des Dichtelements durch die Geometrie des Dichtelements, insgesamt oder einzelner Bereiche, angepasst werden.

Das Dichtelement kann vorteilhaft an verschiedenen Modulschnittstellen und/oder Übergangskanälen in der Gasturbine angewandt werden, insbesondere an thermisch hoch belasteten Bereichen in Strömungsmaschinen.

Die vorliegende Erfindung wird im Folgenden anhand der beigefügten Zeichnungen, in welcher identische Bezugszeichen gleiche oder ähnliche Bauteile bezeichnen, exemplarisch erläutert. In den jeweils schematisch vereinfachten Figuren gilt:
- **Fig. 1**: zeigt eine Schnittdarstellung eines äußeren Gehäusebereichs einer Gasturbine mit einem erfindungsgemäßen Dichtelement;
- **Fig. 2**: zeigt ein weiteres erfindungsgemäßes Dichtelement in einer Ansicht nach Fig. 1;
- **Fig. 3**: zeigt noch ein weiteres erfindungsgemäßes Dichtelement in einer Ansicht nach Fig. 1; und
- **Fig. 4a,b,c**: zeigen ein erfindungsgemäßes Dichtelement in verschiedenen perspektivischen Ansicht.

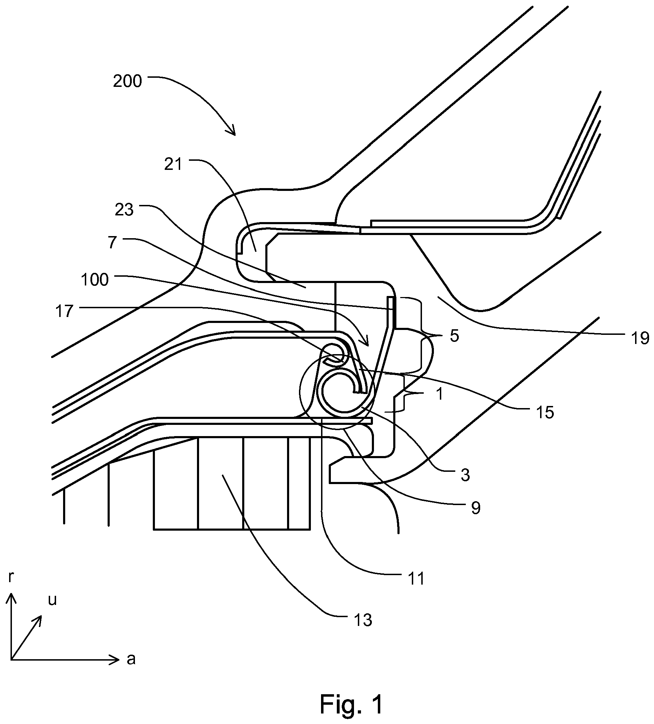

**Fig. 1** zeigt eine Schnittdarstellung eines äußeren Gehäusebereichs 200 einer Gasturbine mit einem erfindungsgemäßen Dichtelement 100 und mehreren statischen Bauteilen.

Das Dichtelement 100 ist in diesem Ausführungsbeispiel ein in Umfangsrichtung u (senkrecht zur Zeichenebene) segmentiertes Spiralblech und weist als ersten radialen Bereich 1 eine Spirale 3 als versteifend wirkende Fixierungskomponente auf. Am radial äußeren Ende in Richtung Gehäusewandung ist eine Dichtfläche 7 innerhalb eines zweiten radialen Bereichs 5 dargestellt.

Die Spirale 3 ist an einem radial im wesentlichen nach innen gerichteten Steg 15 fixiert.

Die Dichtfläche 7 liegt an einem vorderen Leitschaufelhaken 19 an, der in einer Gehäusenut 21 geführt wird. Die Gehäusenut 21 weist einen Gehäusesteg 23 auf. Der vordere Leitschaufelhaken 19 kann sich in der Gehäusenut 21 axial bewegen. Bei einer axialen Bewegung des vorderen Leitschaufelhakens 19 wird auch die Dichtfläche 7 axial bewegt. Wenn vorausgesetzt wird, dass sich die Spirale 3, die an dem Steg 15 fixiert ist, nicht axial bewegt, wird folglich der zweite radiale Bereich 5 elastisch verformt. Diese Verformung hängt von der Steifigkeit des zweiten radialen Bereichs 5 ab. Ist die Steifigkeit hoch, so ist der Widerstand gegen diese elastische Verformung ebenfalls hoch. Ebenso ist der Widerstand gegen elastische Verformung niedrig, wenn die Steifigkeit niedrig ist. Die Steifigkeit kann an die voaussichtlichen axialen Verschiebewege angepasst werden, indem beispielsweise die Blechstärke des segmentierten Spiralblechs 100 variiert wird und/oder die Werkstoffauswahl für das segmentierte Spiralblech 100 (Dichtelement 100) entsprechend angepasst wird. Die Steifigkeit des ersten radialen Bereichs 1 sollte dagegen hoch sein, da dieser erste radiale Bereich 1 an dem Steg 15 fixiert ist.

Rein exemplarische axiale Verschiebewege im Betriebszustand der Gasturbine können für Einbautoleranzen und/oder Fertigungstoleranzen beispielsweise bei ca. 0,5 mm bis 1 mm liegen und bei thermisch bedingten, axialen Verschiebewegen bei ca. 1mm bis 3 mm, insbesondere bei 2 mm.

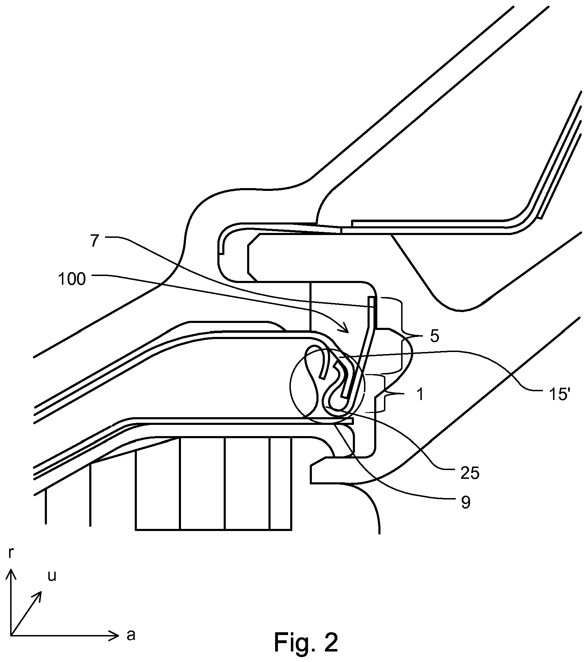

**Fig. 2** zeigt ein weiteres erfindungsgemäßes Dichtelement 100 in einer Ansicht nach Fig. 1.

Das Dichtelement 100 weist in diesem Ausführungsbeispiel ein in Umfangsrichtung u (senkrecht zur Zeichenebene) segmentiertes Blech mit einer Angelhakenform 25 auf. Am radial äußeren Ende in Richtung Gehäusewandung ist eine Dichtfläche 7 innerhalb eines zweiten radialen Bereichs 5 dargestellt.

Das segmentierte Blech mit der Angelhakenform 25 ist an einem Steg 15' fixiert, der ähnlich dem Steg 15 aus Fig. 1 aufgebaut ist, weshalb auf die Beschreibung in Fig. 1 verwiesen wird. Gleiches gilt für den ersten radialen Bereich 1, den zweiten radialen Bereich 5 und die Dichtfläche 7.

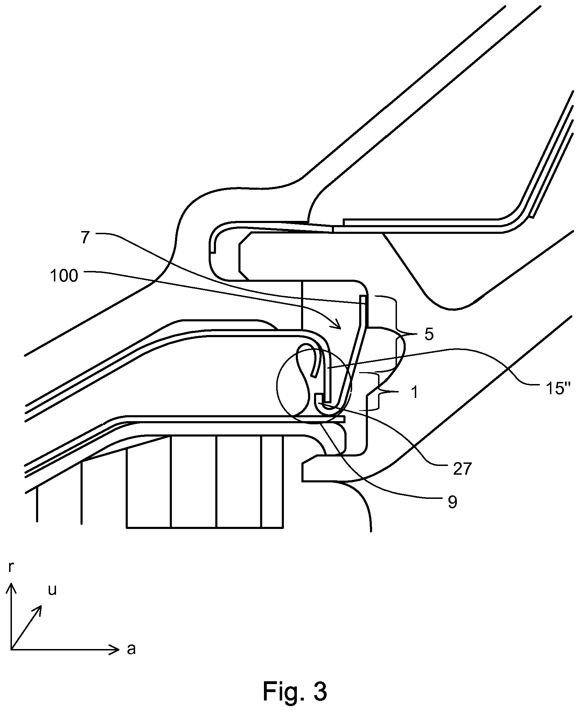

**Fig. 3** zeigt noch ein weiteres erfindungsgemäßes Dichtelement 100 in einer Ansicht nach Fig. 1.

Das Dichtelement 100 weist in diesem Ausführungsbeispiel ein in Umfangsrichtung u (senkrecht zur Zeichenebene) segmentiertes Blech mit einer V-Hakenform 27 auf. Am radial äußeren Ende in Richtung Gehäusewandung ist eine Dichtfläche 7 innerhalb eines zweiten radialen Bereichs 5 dargestellt.

Das segmentierte Blech mit der V-Hakenform 27 ist an einem Steg 15" fixiert, der ähnlich dem Steg 15 aus Fig. 1 aufgebaut ist, weshalb auf die Beschreibung in Fig. 1 verwiesen wird. Gleiches gilt für den ersten radialen Bereich 1, den zweiten radialen Bereich 5 und die Dichtfläche 7.

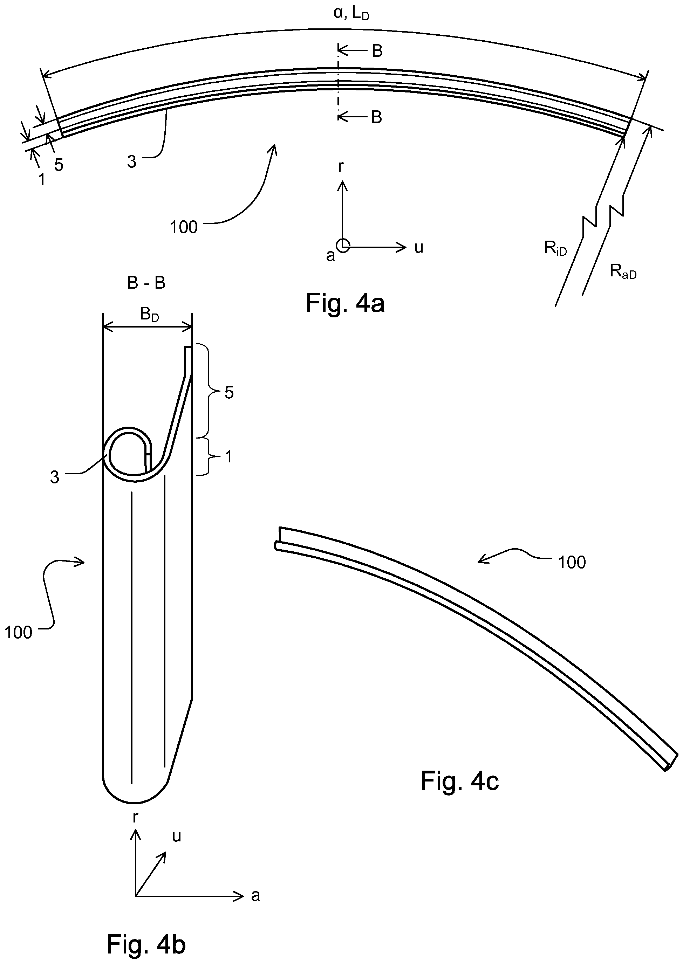

**Fig. 4a** zeigt ein erfindungsgemäßes Dichtelement 100 in einer Aufsicht in Axialrichtung a (senkrecht zur Zeichenebene).

Das Dichtelement 100 ist als segmentiertes Spiralblech mit einer Spirale 3 dargestellt. Das segmentierte Spiralblech ist in Fig. 1 im Einbauzustand und in einer anderen Ansicht dargestellt.

Zur Verdeutlichung werden die folgenden Maßangaben dargestellt:
- R_{iD}: Innenradius; Radius von der Drehachse der Gasturbine bis zu einem radial inneren Ende des radial ersten Bereichs 1 des Dichtelements 100;
- R_{aD}: Außenradius; Radius von der Drehachse der Gasturbine bis zu einem radial äußeren Ende des radial zweiten Bereichs 3 des Dichtelements 100;
- L_{D}: Bogenlänge; Länge eines Segmentumfangs; und
- α: Mittelpunktswinkel; Winkel bezogen auf die Drehachse der Gasturbine über die Bogenlänge.

**Fig. 4b** zeigt das erfindungsgemäßes Dichtelement 100 aus Fig. 4a in der in Fig. 4a angegebenen Ebene B - B.

Die Breite B_{D} zeigt Ausdehnung oder Länge des Dichtelements 100 in Achsrichtung a.

**Fig. 4c** zeigt das erfindungsgemäßes Dichtelement 100 in perspektivischen Ansicht.

### Bezugszeichenliste

- 100: Dichtelement; segmentiertes Spiralblech
- 200: Gehäusebereich
- a: axial; Axialrichtung
- r: radial; Radialrichtung
- u: Umfangsrichtung
- R_{iD}: Innenradius
- R_{aD}: Außenradius
- L_{D}: Bogenlänge
- α: Mittelpunktswinkel
- B_{D}: Breite
- 1: erster radialer Bereich
- 3: Spirale
- 5: zweiter radialer Bereich
- 7: Dichtfläche
- 9: Nut
- 11: Dichtungsträger
- 13: Einlaufbelag einer Anstreifdichtung
- 15,15',15": Steg; umlaufender Steg; Endbereich eines Sicherungselements
- 17: weiteres gehäuseseitiges Bauteil
- 19: vorderer Leitschaufelhaken; Leitschaufelaufhängung
- 21: Gehäusenut
- 23: Gehäusesteg
- 25: segmentiertes Blech mit Angelhakenform
- 27: segmentiertes Blech mit V-Hakenform

## Patentansprüche

1. Dichtungsanordnung einer axialen Strömungsmaschine zum Abdichten von Bereichen in oder an wenigstens zwei statischen Bauteilen der Strömungsmaschine, wobei die Bauteile axial relativ zueinander verschiebbar sind, umfassend ein Dichtelement (100) und eines der wenigstens zwei statischen Bauteile der Strömungsmaschine, wobei das Dichtelement (100) in Umfangsrichtung der Strömungsmaschine segmentiert ausgestaltet ist,
**dadurch gekennzeichnet, dass**
das Dichtelement (100) einen spiral- oder hakenförmig ausgebildeten, versteifend wirkenden ersten radialen Bereich (1) mit einer ersten Steifigkeit und einen zweiten radialen Bereich (5) mit einer zweiten Steifigkeit aufweist, wobei die erste Steifigkeit größer als die zweite Steifigkeit ist und der erste radiale Bereich (1) als Fixierungskomponente des Dichtelements in einem statischen Bauteil der Strömungsmaschine fixiert ist.

2. Dichtungsanordnung nach Anspruch 1, wobei der erste radiale Bereich (1) in einer Nut (9) oder an einem Steg (15) in einem statischen Bauteil der Strömungsmaschine fixiert ist.

3. Dichtungsanordnung nach einem der vorangegangen Ansprüche, wobei die zweite Steifigkeit kleiner als die erste Steifigkeit ist und der zweite radiale Bereich (5) eine Dichtfläche (7) aufweist.

4. Dichtungsanordnung nach einem der vorangegangen Ansprüche, wobei der erste radiale Bereich (1) an einem Dichtungsträger (11) eines Einlaufbelags (13) angeordnet ist.

5. Dichtungsanordnung nach einem der vorangegangen Ansprüche, wobei die Dichtfläche (7) des Dichtelements (100) an einer Leitschaufelaufhängung (19) am Gehäuse der Strömungsmaschine anliegt.

6. Dichtungsanordnung nach einem der vorangegangen Ansprüche, wobei die abzudichtenden Bereiche in einem Hochdruckturbinenbereich und/oder in einem Niederdruckturbinenbereich der Strömungsmaschine angeordnet sind.

7. Dichtungsanordnung nach einem der vorangegangen Ansprüche, wobei die abzudichtenden Bereiche im Gehäuse der Strömungsmaschine zwischen einem Hochdruckturbinenbereich und einem Niederdruckturbinenbereich angeordnet sind.

8. Dichtungsanordnung nach einem der vorangegangen Ansprüche, wobei die abzudichtenden Bereiche zwischen einerseits einer Brennkammer und andererseits einem Hochdruckturbinenbereich oder Hochdruckverdichterbereich angeordnet sind.

9. Dichtungsanordnung nach einem der vorangegangen Ansprüche, wobei das Dichtelement (100) ein Spiralblech ist.

## Claims

1. Sealing arrangement (100) of an axial turbomachine for sealing regions in or on at least two static components of the turbomachine, the components being axially movable relative to one another, comprising a sealing element (100) and one of the at least two static components of the turbomachine, the sealing element (100) being designed so as to be segmented in the peripheral direction of the turbomachine,
**characterized in that**
the sealing element (100) has a spiral-shaped or hook-shaped, rigidifying first radial region (1) having a first rigidity and a second radial region (5) having a second rigidity, the first rigidity being greater than the second rigidity and the first radial region (1) being fixed in a static component of the turbomachine as a fixing component of the sealing element.

2. Sealing arrangement according to claim 1, wherein the first radial region (1) is fixed in a groove (9) or on a connecting piece (15) in a static component of the turbomachine.

3. Sealing arrangement according to either of the preceding claims, wherein the second rigidity is lower than first rigidity and the second radial region (5) has a sealing surface (7).

4. Sealing arrangement according to any of the preceding claims, wherein the first radial region (1) is arranged on a seal support (11) of an inlet lining (13).

5. Sealing arrangement according to any of the preceding claims, wherein the sealing surface (7) of the sealing element (100) rests on a guide vane mounting (19) on the housing of the turbomachine.

6. Sealing arrangement according to any of the preceding claims, wherein the regions to be sealed are arranged in a high-pressure turbine region and/or in a low-pressure turbine region of the turbomachine.

7. Sealing arrangement according to any of the preceding claims, wherein the regions to be sealed are arranged in the housing of the turbomachine between a high-pressure region and a low-pressure region.

8. Sealing arrangement according to any of the preceding claims, wherein the regions to be sealed are arranged between a combustion chamber on one side and a high-pressure turbine region or high-pressure compressor region on the other side.

9. Sealing arrangement according to any of the preceding claims, wherein the sealing element (100) is a spiral metal sheet.

## Revendications

1. Dispositif d'étanchéité (100) d'une turbomachine axiale pour l'étanchéité de zones situées dans ou sur au moins deux composants statiques de la turbomachine, les composants pouvant être déplacés axialement l'un par rapport à l'autre, et comprenant un élément d'étanchéité (100) et un des au moins deux composants statiques de la turbomachine, l'élément d'étanchéité (100) étant aménagé par segments dans le sens circonférentiel de la turbomachine,
**caractérisé en ce que**
l'élément d'étanchéité (100) comprend une première zone radiale (1) en forme de spirale ou de crochet, à effet rigidifiant, ayant une première rigidité et une deuxième zone radiale (5) ayant une deuxième rigidité, la première rigidité étant supérieure à la deuxième rigidité, et la première zone radiale (1) étant fixée dans un composant statique de la turbomachine en tant que composant de fixation de l'élément d'étanchéité.

2. Dispositif d'étanchéité selon la revendication 1, la première zone radiale (1) étant fixée dans une rainure (9) ou sur un montant (15) dans un composant statique de la turbomachine.

3. Dispositif d'étanchéité selon l'une des revendications précédentes, la deuxième rigidité étant inférieure à la première rigidité et la deuxième zone radiale (5) présentant une surface d'étanchéité (7).

4. Dispositif d'étanchéité selon l'une des revendications précédentes, la première zone radiale (1) étant disposée sur un support d'étanchéité (11) d'une garniture de rodage (13).

5. Dispositif d'étanchéité selon l'une des revendications précédentes, la surface d'étanchéité (7) de l'élément d'étanchéité (100) étant appuyée sur une suspension d'aube directrice (19) au niveau du carter de la turbomachine.

6. Dispositif d'étanchéité selon l'une des revendications précédentes, les zones à étanchéifier étant disposées dans une zone de turbine haute pression et/ou dans une zone de turbine basse pression de la turbomachine.

7. Dispositif d'étanchéité selon l'une des revendications précédentes, les zones à étanchéifier étant disposées dans le carter de la turbomachine entre une zone de turbine haute pression et une zone de turbine basse pression.

8. Dispositif d'étanchéité selon l'une des revendications précédentes, les zones à étanchéifier étant disposées entre une chambre de combustion d'un côté et une zone de turbine haute pression ou une zone de compresseur haute pression d'un autre côté.

9. Dispositif d'étanchéité selon l'une des revendications précédentes, l'élément d'étanchéité (100) étant une tôle spiralée.
